# EUROPÄISCHE PATENTSCHRIFT

(11) **EP 3 267 061 B1**
(45) Veröffentlichungstag und Bekanntmachung des Hinweises auf die Patenterteilung: **09.12.2020**
(21) Anmeldenummer: 17001042.5
(22) Anmeldetag: 21.06.2017
(51) Int. Cl.: F16D 3/00, F16D 3/223

(54) **GLEICHLAUFGELENK MIT INTEGRALEM GELENKINNENTEIL UND VERFAHREN ZUR HERSTELLUNG EINES SOLCHEN GLEICHLAUFGELENKS**
FEED-THROUGH COMPONENT HAVING A STRUCTURED METAL COATING AND METHOD FOR MANUFACTURING SUCH A FEED-THROUGH COMPONENT
JOINT HOMOCINÉTIQUE COMPRENANT UNE PARTIE INTÉRIEURE ARTICULÉE ET PROCÉDÉ DE FONCTIONNEMENT D'UN TEL JOINT HOMOCINÉTIQUE

(30) Priorität: 21.06.2016 DE 102016007495
(43) Veröffentlichungstag der Anmeldung: 10.01.2018
(73) Patentinhaber: IFA-Technologies GmbH, 39340 Haldensleben (DE)
(72) Erfinder: Schmicker, David, 39108 Magdeburg (DE); Krüger, Andreas, 39218 Schönebeck/Elbe (DE); Schmidt, Martin, 39340 Haldensleben (DE)
(74) Vertreter: Patentanwälte Schuster, Müller & Partner mbB

(56) Entgegenhaltungen:
- DE-A1-102010 014 285
- DE-C1- 3 132 363
- US-A1- 2004 097 292
- US-A1- 2012 015 750

## Beschreibung

### Stand der Technik

Die Erfindung geht aus von einem Gleichlaufgelenk mit integralem Gelenkinnenteil nach der Gattung des Oberbegriffs des Anspruchs 1 sowie einem Verfahren zur Herstellung eines solchen Gleichlaufgelenks nach der Gattung des Oberbegriffs des Anspruchs 4.

Gleichlaufgelenke mit integralen Gelenkinnenteilen sind bereits bekannt. Grundsätzlich weisen sie den gleichen Aufbau wie herkömmliche Gleichlaufgelenke auf. Im Unterschied zu herkömmlichen Gleichlaufgelenken geht jedoch das Gelenkinnenteil eine integrale, d. h. zerstörungsfrei unlösbare Verbindung zu einem Wellenstück ein, das drehfest mit einem angrenzenden Bauteil, einem sog. Anschlussteil, in der Regel mit einer Welle oder einem Wellenzapfen, zu verbinden ist. Eine solche integrale Verbindung ermöglicht im Vergleich zu einer vielteiligen Verbindung zwischen Gelenk und angrenzendem Bauteil, beispielsweise einer Welle-Nabe-Verbindung mit Profilverzahnung und Axialsicherung, neben dem Vorteil einer Gewichtsreduzierung der Verbindung, auch eine Verringerung des Montageaufwandes beim Einbau der Gleichlaufgelenke in Antriebsstränge von Kraftfahrzeugen. Auf diesem Prinzip basierend ist ein Verfahren zur Herstellung einer Zwischenwelle mit einer integralen Kugelnabe bekannt, bei dem ein Wellenstück und das Gelenkinnenteil eines Gleichlaufdrehgelenks miteinander verschweißt sind, wobei an dem Gelenkinnenteil je nach Gestalt der Welle ein Ringbund oder ein Zapfenansatz angeformt wird, an dem die Schweißverbindung ausgeführt wird. Nach dem Herstellen der Schweißverbindung wird die Zwischenwelle einer Wärmebehandlung unterzogen, bei der in der Randschicht des Gelenkinnenteils eine deutlich höhere Härte erzeugt wird als im Kern des Wellenstücks (DE 10 2004 062 844 B4).

Der Nachteil dieses Verfahrens besteht darin, dass aufgrund des nachgeschalteten Härtevorgangs der für die Abdichtung eines solchen Gelenks notwendige Balg erst nach dem Härtevorgang montiert werden kann, wobei er über das Gelenkinnenteil aufgezogen werden muss. Insbesondere im Bereich von Längswellen, weisen diese zur Abdichtung notwendigen Komponenten im Allgemeinen jedoch nicht die notwendige Elastizität auf, um über den Außendurchmesser des Gelenkinnenteils gestülpt werden zu können.

Bekannt ist auch ein Verschiebegelenk, das insbesondere als Mittengelenk einer Längswelle eines Kraftfahrzeugs eingesetzt wird und bei dem die Innennabe einstückig mit einem Wellenzapfen ausgebildet ist, auf dem ein Anschlussbereich zur lösbaren Anbindung an ein angrenzendes Bauteil sowie ein Dichtungsbereich zur Anbindung eines ersten Endes eines Faltenbalgs vorgesehen ist. Die Verbindung des Gelenkinnenteils mit einem Wellenabschnitt erfolgt über eine Anschlusshülse, die mit der Welle verschweißt ist. Die Anschlusshülse wird auf den Anschlussbereich des Wellenzapfens aufgeschoben (WO 2008/131729 A1).

Ferner ist es bei einer Verbindungsanordnung eines homokinetischen Drehgelenks mit einer Welle bekannt, das Gelenkinnenteil mit einem Adapter zu verschweißen, der Mittel zur lösbaren Verbindung mit einer Welle oder einen Wellenzapfen aufweist. Dadurch kann das Drehgelenk unabhängig von dem Anschluss an beliebig ausgeführte Wellen als ein Grundgelenk ausgebildet sein, während der Adapter nach dem Baukastenprinzip an unterschiedlich ausgeführte Wellen angepasst ist (DE 10 2014 012 543 A1). Der Nachteil dieser Verbindungsanordnung besteht in dem höheren Aufwand, die die Prozessschritte der Herstellung des Adapters und das Einpressen eines Zapfens in den Adapter sowie die Sicherheitsringmontage erfordern. Zudem ist die Gestaltung dieser Verbindung im Rahmen eines Baukastensystems dadurch eingeschränkt, dass das Gelenkinnenteil trotz Verbindung mit einem Adapter immer an das Anschlussteil, z. B. einen Rohradapter angepasst sein muss.

Mit dem Ziel der Gewährleistung eines einfachen Aufbaus und einer möglichst geringen Anzahl von Bauteilen, wurde des Weiteren ein axial verschiebliches Kugeldrehgelenk entwickelt, das insbesondere als Zwischengelenk in einer Längsantriebswelle für Kraftfahrzeuge eingesetzt wird. Das Gelenkinnenteil des Kugeldrehgelenks ist einstückig mit einer angeformten Welle verbunden. Beispielsweise ist sein eines Ende als Rohrquerschnitt ausgebildet, der an eine sich anschließende Rohrwelle angeschweißt ist (DE 94 14 718 U1).

### Die Erfindung und ihre Vorteile

Das erfindungsgemäße Gleichlaufgelenk mit den kennzeichnenden Merkmalen des Anspruchs 1 hat gegenüber dem oben genannten Stand der Technik den wesentlichen Vorteil, dass es als fertige Baugruppe einsatzbereit zur Verfügung steht. Diese Einsatzbereitschaft bezieht sich nicht nur, wie aus dem Stand der Technik bereits bekannt, auf die Dichtheit des Gleichlaufgelenks, sondern vor allem auf die Materialeigenschaften des Gelenkinnenteils, wie Oberflächenhärte für eine hohe Verschleißresistenz der Kugellaufbahnen und Zähigkeit zur Übertragung des Drehmoments insbesondere im Bereich seines kleinsten Durchmessers. Von Vorteil ist auch, dass sich die Schnittstelle zur Anbindung an ein Anschlussteil in dem anzuschweißenden Adapter befindet, so dass an dem Gelenkinnenteil und somit an dem Gleichlaufgelenk keine unterschiedlichen Montagearbeitsgänge ausgeführt werden müssen. Somit ist seine Baukastenfunktion voll gewährleistet.

Diese Vorteile werden dadurch erreicht, dass ein beiderseits abgedichtetes Gleichlaufgelenk mit einem integralen Gelenkinnenteil verwendet wird.

Erfindungsgemäß ist das integrale Gelenkinnenteil an seinem freien, aus dem Dichtelement herausragenden Ende mit einem Schweißansatz zur Aufnahme eines Adapters versehen und der Außendurchmesser dieses Schweißansatzes größer als der kleinste Außendurchmesser des integralen Gelenkinnenteils. Die freie Stirnseite des Adapters ist zur Verbindung mit einem Anschlussteil komplementär zu dessen Stirnfläche ausgebildet. Das integrale Gelenkinnenteil ist gehärtet. Der vergrößerte Durchmesser des Schweißansatzes verhindert eine Entfestigung des gehärteten Bauteils beim Verschweißen des Adapters mit dem Gelenkinnenteil. Das Maß der Erhöhung gegenüber dem kleinsten Durchmesser des Gelenkinnenteils, in dem in der Regel der Balg befestigt ist, ist einerseits von der notwendigen Bauteilfestigkeit nach dem Schweißvorgang abhängig und andererseits durch die maximal zulässige Dehnung des elastischen Dichtelements bei seiner Montage auf dem Gelenkinnenteil bestimmt.

Nach einer vorteilhaften Ausgestaltung der Erfindung ist der Außendurchmesser des integralen Gelenkinnenteils im Bereich der Aufnahme des Dichtelements am kleinsten. Dadurch ist der axiale Sitz des Dichtungselements gesichert, so dass es lediglich noch mit einem Spannband gegen eine radiale Aufweitung gesichert zu werden braucht.

Nach einer anderweitigen vorteilhaften Ausgestaltung der Erfindung ist der Adapter ein Rohradapter, der an seiner freien Stirnseite einen Schweißansatz für eine Rohrwelle aufweist. Grundsätzlich ist jedoch jede Anschlussform für ein Anschlussteil denkbar.

Das erfindungsgemäße Verfahren zur Herstellung eines Gleichlaufgelenks mit den kennzeichnenden Merkmalen des Anspruchs 4 hat gegenüber dem oben genannten Stand der Technik den wesentlichen Vorteil, dass ein ohne weiteres über einen Adapter mit Anschlussteilen verbindbares, einsatzbereites allseitig abgedichtetes Gleichlaufgelenk zur Verfügung steht. Das das Gleichlaufgelenk von seiner Gelenkinnenteilseite her abdichtende elastische Dichtelement, in der Regel ein Faltenbalg, wird nach dem Härtevorgang des Gelenkinnenteils, jedoch noch vor dessen Verbindung mit dem Adapter über den Schweißansatz auf das Gelenkinnenteil aufgezogen und an diesem befestigt.

Dadurch lassen sich im Herstellungsprozess des Gleichlaufgelenks Kosten einsparen. Diese entstehen unter anderem aufgrund der gegenüber der Steckverbindung günstigeren Schweißung, dem Wegfall von Komponenten wie dem Sicherungsring und Rationalisierungsmaßnahmen durch die Umsetzungsmöglichkeit einer modularen Montage des Gleichlaufgelenkes. Der Vorteil gegenüber einer formschlüssigen Kraftübertragung, beispielsweise durch eine Verzahnung besteht darin, dass die Prozessschritte der Verzahnungsherstellung und des Einpressens eines Zapfens mit Sicherungsringmontage durch einen vergleichsweise günstigeren Schweißprozess ersetzt werden. Für die Modularität der Anbindung, d. h. ihre Verwendung in einem Baukastensystem, ist zudem keine zweiteilige Ausführung des Gelenkinnenteils erforderlich, da diese Schnittstelle in das Anschweißteil, das mit dem Adapter verbunden wird, gelegt werden kann.

Weitere Vorteile und vorteilhafte Ausgestaltungen der Erfindung sind der nachfolgenden Beschreibung, den Ansprüchen und den Zeichnungen entnehmbar.

### Zeichnung

Ein bevorzugtes Ausführungsbeispiel des erfindungsgemäßen Gegenstands ist in der Zeichnung dargestellt und wird im Folgenden näher erläutert. Es zeigen
- Fig. 1a: ein erfindungsgemäßes Gleichlaufgelenk,
- Fig. 1b: einen Rohradapter und
- Fig. 2: das mit dem Rohradapter verschweißte Gleichlaufgelenk.

### Beschreibung der Ausführungsbeispiele

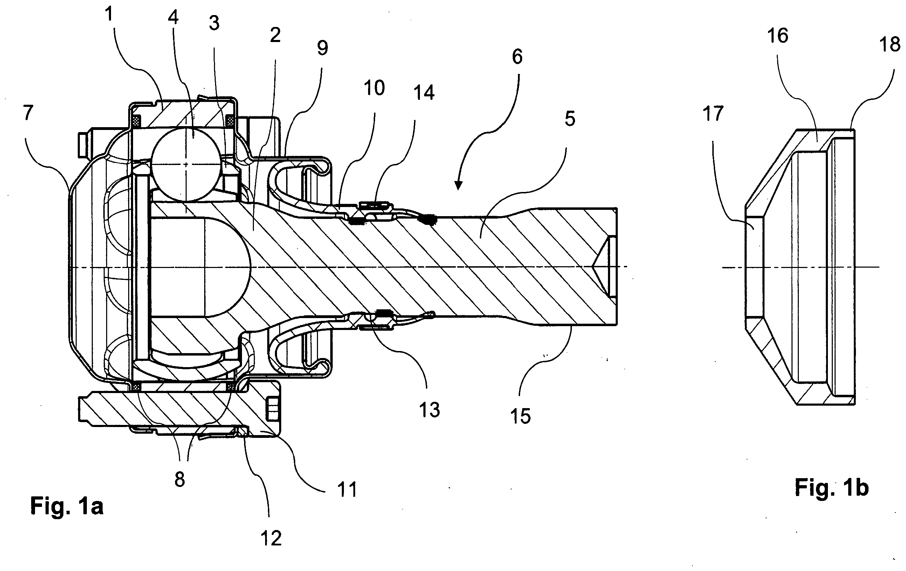

Das in **Fig. 1a** dargestellte erfindungsgemäße Gleichlaufgelenk besteht aus einem flanschbaren Gelenkaußenteil **1** und einem Gelenkinnenteil **2,** das über in einem Käfig **3** gehaltene Kugeln **4** drehfest mit dem Gelenkaußenteil **1** verbunden ist. Die Kugeln **4** sind dabei von inneren Kugelbahnen des Gelenkaußenteils **1** sowie äußeren Kugelbahnen des Gelenkinnenteils **2** aufgenommen. Das Gelenkinnenteil **2** bildet zusammen mit einem einstückig mit ihm verbunden Wellenstück **5** ein integrales Gelenkinnenteil **6.** Auf der dem Gelenkinnenteil **2** abgewandten Seite ist das Gleichlaufgelenk mit einem Verschlussdeckel **7,** der über eine Flachdichtung **8** an dem Gelenkaußenteil **1** anliegt, abgedichtet. Auf der Seite des Wellenstücks **5** des integralen Gelenkinnenteils **6** ist dieses mit einer Dichtkappe **9** und einem Balg **10** abgedichtet. Die Dichtkappe **9** liegt ebenfalls über eine Flachdichtung **8** an dem Gelenkaußenteil **1** an und ist mittels Zylinderschrauben **11** und Unterlegscheiben **12** mit Letzterem verschraubt. Die Dichtkappe **9** nimmt den Balg **10** mit ihrer freien Stirnseite, die zu diesem Zweck zu einer Bördelkante geformt ist, auf. Mit seiner anderen Seite ist der Balg **10** in einem gegenüber dem Außendurchmesser des integralen Gelenkinnenteils **6** durchmesserreduzierten Balgsitz **13** mittels einer Spannschelle **14** auf dem integralen Gelenkinnenteil **6** befestigt. An seinem äußeren freien Ende ist das integrale Gelenkinnenteil **6** mit einem gegenüber seinem Außendurchmesser etwas vergrößerten Durchmesser versehen, der einen Schweißansatz **15** bildet.

Das integrale Gelenkinnenteil **6** kann aus einem Vergütungsstahl oder einem Einsatzstahl hergestellt werden. In Abhängigkeit des verwendeten Werkstoffes kann ein geeignetes Härteverfahren wie Induktions- oder Einsatzhärten gewählt werden, um die Randschicht des integralen Gelenkinnenteils **6** über die gesamte axiale Länge zu härten. Dadurch wird zum einen die Verschleißresistenz in den Laufbahnen der Kugeln **4** erreicht, zum anderen wird auch die Festigkeit zur Übertragung des Drehmomentes, insbesondere an dem kleinsten Durchmesser im Bereich des Balgsitzes **13,** gewährleistet.

Das Gleichlaufgelenk kann beispielsweise in einer Gelenkwelle montiert sein. Es ist jedoch von dieser entkoppelt montierbar, indem als erstes das integrale Gelenkinnenteil **6,** der Kugelkäfig **3** und das Gelenkaußenteil **1** mit den Kugeln **4** bestückt werden. Danach werden von beiden Seiten die Flachdichtungen **8,** die mit dem Balg **10** versehene Dichtkappe **9** und der Verschlussdeckel **7** aufgesetzt, das Gleichlaufgelenk mit Fett befüllt und anschließend werden der Verschlussdeckel **7** und die Dichtkappe **9** auf den Außendurchmesser des Gelenkaußenteils **1** aufgepresst.

Das so vormontierte Gleichlaufgelenk wird anschließend mit einem Rohradapter **16,** welcher in **Fig. 1b** dargestellt ist und an seiner dem integralen Gelenkinnenteil **6** zugewandten Stirnseite eine dem Durchmesser des Schweißansatz **15** entsprechende Öffnung **17** aufweist, mit dem integralen Gelenkinnenteil **6** verschweißt. Im vorliegenden Beispiel ist der Rohradapter **16** an seinem dem integralen Gelenkinnenteil **6** abgewandten Stirnseite mit einem Rohransatz **18** versehen. Als Schweißverfahren können zum Beispiel Reibschweißen, Magnet-Arc- oder Laserschweißen eingesetzt werden. In dem vorliegenden Beispiel ist die Fügestelle für das aufgleitende Reibschweißen, welches beispielsweise aus der DE 10 2008 064 267 A1 bekannt ist, ausgelegt. Der Fügedurchmesser des Schweißansatzes **15** ist dabei, wie oben beschrieben, größer als der kleinste Durchmesser im Bereich des Balgsitzes **13** gewählt, um der Entfestigung der Randschicht durch den Schweißvorgang konstruktiv entgegenzuwirken. Nach oben begrenzt ist der Durchmesser des Schweißansatzes **15** jedoch durch die maximale Dehnung des Balges **10,** welcher wie bei der Montage des Gleichlaufgelenks beschrieben, über dieses Ende des integralen Gelenkinnenteils **6** stülpbar sein muss. Der axiale Abstand zwischen dem Balgsitz **13** und dem Schweißansatz **15** muss dabei ausreichend groß sein, um den Balg **10** vor dem Einfluss der Schweißwärme zu schützen.

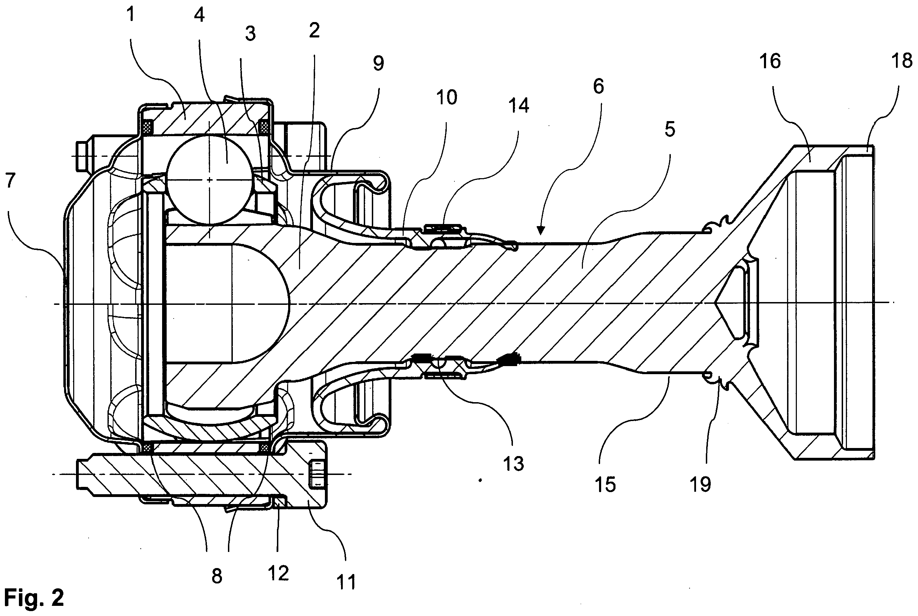

In **Fig. 2** ist das mit dem Rohradapter **16** verschweißte Gleichlaufgelenk dargestellt. Eine Schweißwulst **19,** welche im Fall der Anwendung des Reibschweißens entsteht, kann nachträglich im Bedarfsfall spanend entfernt werden. Zur weiteren Herstellung der Gelenkwelle kann diese Baugruppe z.B. über den Rohransatz **18** mit weiteren Teilbaugruppen der Gelenkwelle gefügt werden.

### Bezugszahlenliste

- 1: Gelenkaußenteil
- 2: Gelenkinnenteil
- 3: Kugelkäfig
- 4: Kugeln
- 5: Wellenstück
- 6: Integrales Gelenkinnenteil
- 7: Verschlussdeckel
- 8: Flachdichtung
- 9: Dichtkappe
- 10: Balg
- 11: Zylinderschraube
- 12: Unterlegscheibe
- 13: Balgsitz
- 14: Spannschelle
- 15: Schweißansatz
- 16: Rohradapter
- 17: Öffnung
- 18: Rohransatz
- 19: Schweißwulst

## Patentansprüche

1. Gleichlaufgelenk, bestehend aus einem Gelenkaußenteil (1) mit inneren Kugelbahnen, einem Gelenkinnenteil (2) mit den inneren Kugelbahnen zugeordneten äußeren Kugelbahnen und aus in einem Kugelkäfig (3) gehaltenen Kugeln (4), wobei das Gelenkaußenteil (1) mit einem Anschlussteil verbindbar und auf der diesem Anschlussteil zugewandten Seite mit einem Verschlussdeckel (7) abgedichtet ist und das Gelenkinnenteil (2) als ein integrales, mit einem Wellenstück (5) zerstörungsfrei unlösbar verbundenes Gelenkinnenteil (6) ausgebildet und mittels eines flexiblen Dichtelements (10) zum Gelenkaußenteil (1) hin abgedichtet ist,
**dadurch gekennzeichnet,**
**dass** das integrale Gelenkinnenteil (6) an seinem freien, aus dem Dichtelement (10) herausragenden Ende mit einem Schweißansatz (15) zur Aufnahme eines Adapters (16) versehen ist, der Außendurchmesser dieses Schweißansatzes (15) größer ist als der kleinste Außendurchmesser des integralen Gelenkinnenteils (6) und dass das integrale Gelenkinnenteil (6) gehärtet ist.

2. Gleichlaufgelenk nach Anspruch 1,
**dadurch gekennzeichnet,**
**dass** der Außendurchmesser des integralen Gelenkinnenteils (6) im Bereich der Aufnahme des Dichtelements (10) am kleinsten ist.

3. Gleichlaufgelenk nach Anspruch 1 oder 2,
**dadurch gekennzeichnet,**
**dass** der Adapter ein Rohradapter (16) ist.

4. Verfahren zur Herstellung eines Gleichlaufgelenks, bestehend aus einem Gelenkaußenteil (1) mit inneren Kugelbahnen, einem Gelenkinnenteil (2) mit den inneren Kugelbahnen zugeordneten äußeren Kugelbahnen und aus in einem Kugelkäfig (3) gehaltenen Kugeln (4), wobei das Gelenkaußenteil (1) mit einem Anschlussteil verbindbar und auf der diesem Anschlussteil zugewandten Seite mit einem Verschlussdeckel (7) abgedichtet wird und das Gelenkinnenteil (2) als integrales, mit einem Wellenstück (5) zerstörungsfrei unlösbar verbundenes Gelenkinnenteil (6) ausgebildet ist und diesseitig mittels eines flexiblen Dichtelements (10) zum Gelenkaußenteil (1) hin abgedichtet wird,
**dadurch gekennzeichnet,**
- **dass** das integrale, mit dem Wellenstück (5) verbundene Gelenkinnenteil (6) an seinem freien, aus dem Dichtelement (10) herausragenden Ende mit einem Schweißansatz (15) zur Aufnahme eines Adapters (16) versehen wird, wobei der Außendurchmesser dieses Schweißansatzes (15) größer ist als der kleinste Außendurchmesser des integralen Gelenkinnenteils (6),
- **dass** das integrale Gelenkinnenteil (2) gehärtet wird,
- **dass** das Dichtelement (10) über das den kleineren Außendurchmesser aufweisende Ende des integralen Gelenkinnenteils (6) aufgezogen und mit dem Gelenkaußenteil (1) verbunden wird und
- **dass** abschließend der Adapter (16) im Bereich des Schweißansatzes (15) mit dem integralen Gelenkinnenteil (6) verschweißt wird.

5. Verfahren nach Anspruch 4,
**dadurch gekennzeichnet,**
**dass** das integrale Gelenkinnenteil (6) randschichtgehärtet wird.

6. Verfahren nach Anspruch 4 oder 5,
**dadurch gekennzeichnet,**
**dass** der Adapter (16) erst nach seiner Verbindung mit einem Anschlussteil mit dem vorgefertigten Gleichlaufgelenk verschweißt wird.

## Claims

1. Constant velocity joint, consisting of an external joint part (1) with internal ball tracks, an internal joint part (2) with external ball tracks assigned to the internal ball tracks and of balls (4) held in a ball cage (3), wherein the external joint part (1) can be connected to a connecting part and is sealed by means of a closure cap (7) on the side facing this connecting part, and the internal joint part (2) is embodied as an integral internal joint part (6), which is connected to a shaft piece (5) in a destruction-free, permanent manner and is sealed towards the external joint part (1) by means of a flexible sealing element (10),
**characterised in that**,
on its free end, which protrudes from the sealing element (10), the integral internal joint part (6) is provided with a welding attachment (15) for accommodating an adapter (16), wherein the outer diameter of this welding attachment (15) is larger than the smallest outer diameter of the integral internal joint part (6) and that the integral internal joint part (6) is hardened.

2. Constant velocity joint in accordance with Claim 1,
**characterised in that**,
the outer diameter of the integral internal joint part (6) is smallest in the area of the accommodation of the sealing element (10).

3. Constant velocity joint in accordance with Claim 1 or 2,
**characterised in that**,
the adapter is a tube adapter (16).

4. A method for producing a constant velocity joint, consisting of an external joint part (1) with internal ball tracks, an internal joint part (2) with external ball tracks assigned to the internal ball tracks and of balls (4) held in a ball cage (3), wherein the external joint part (1) can be connected to a connecting part and is sealed by means of a closure cap (7) on the side facing this connecting part and the internal joint part (2) is embodied as an integral internal joint part (6), which is connected to a shaft piece (5) in a destruction-free, permanent manner and is sealed on this side towards the external joint part (1) by means of a flexible sealing element (10),
**characterised in that**,
- on its free end, which protrudes from the sealing element (10), the integral internal joint part (6), which is connected to the shaft piece (5), is provided with a welding attachment (15) to accommodate an adapter (16), wherein the outer diameter of this welding attachment (15) is larger than the smallest outer diameter of the internal joint part (6),
- the integral internal joint part (2) is hardened,
- the sealing element (10) is mounted over the end of the integral internal joint part (6) that has the smaller outer diameter, and is connected to the external joint part (1) and
- the adapter (16) is subsequently welded to the integral internal joint part (6) in the area of the welding attachment (15).

5. Method in accordance with Claim 4,
**characterised in that**,
the integral internal joint part (6) is surface layer hardened,

6. Method in accordance with Claim 4 or 5,
**characterised in that**,
the adapter (16) is welded to the prefabricated constant velocity joint only after being connected to a connecting part.

## Revendications

1. Joint homocinétique composé d'une partie d'articulation extérieure (1) avec chemins à billes intérieurs, d'une partie d'articulation intérieure (2) avec chemins à billes extérieurs affectés aux chemins à billes intérieurs et de billes maintenues (4) dans une cage à billes (3), la partie d'articulation extérieure (1) pouvant être reliée à une pièce de raccordement et étant étanchéifiée avec un couvercle de fermeture (7) sur le côté tourné vers cette pièce de raccordement et la partie d'articulation intérieure (2) étant conçue comme une partie d'articulation intérieure (6) intégrale, reliée de manière inamovible sans destruction à une pièce d'arbre (5) et étant étanchéifiée avec la pièce d'articulation extérieure (1) au moyen d'un élément d'étanchéité (10) flexible,
**caractérisé**
**en ce que** la partie d'articulation intérieure (6) intégrale est munie, à son extrémité libre, dépassant de l'élément d'étanchéité (10), d'un embout de soudage (15) pour le logement d'un adaptateur (16), le diamètre extérieur de cet embout de soudage (15) est plus grand que le plus petit diamètre extérieur de la partie d'articulation intérieure (6) intégrale et la partie d'articulation intérieure (6) intégrale est durcie.

2. Joint homocinétique conformément à la revendication n°1,
**caractérisé**
**en ce que** le diamètre extérieur de la partie d'articulation intérieure (6) intégrale est le plus petit dans la zone de logement de l'élément d'étanchéité (10).

3. Joint homocinétique conformément à la revendication n°1 ou n° 2,
**caractérisé**
**en ce que** l'adaptateur est un adaptateur tubulaire (16).

4. Procédé de fabrication d'un joint homocinétique, composé d'une partie d'articulation extérieure (1) avec chemins à billes intérieurs, d'une partie d'articulation intérieure (2) avec chemins à billes extérieurs affectés aux chemins à billes intérieurs et de billes maintenues (4) dans une cage à billes (3), la partie d'articulation extérieure (1) pouvant être reliée à une pièce de raccordement et étant étanchéifiée avec un couvercle de fermeture (7) sur le côté tourné vers cette pièce de raccordement et la partie d'articulation intérieure (2) étant conçue comme une partie d'articulation intérieure (6) intégrale, reliée de manière inamovible sans destruction à une pièce d'arbre (5) et étant étanchéifiée de ce côté avec la pièce d'articulation extérieure (1) au moyen d'un élément d'étanchéité (10) flexible,
**caractérisé**
- **en ce que** la partie d'articulation intérieure (6) intégrale, reliée à la pièce d'arbre (5), est munie, à son extrémité libre, dépassant de l'élément d'étanchéité (10), d'un embout de soudage (15) pour le logement d'un adaptateur (16), le diamètre extérieur de cet embout de soudage (15) étant plus grand que le plus petit diamètre extérieur de la partie d'articulation intérieure (6) intégrale,
- **en ce que** la partie d'articulation intérieure (2) intégrale est durcie,
- **en ce que** l'élément d'étanchéité (10) est remonté au-dessus de l'extrémité de la partie d'articulation intérieure (6) intégrale, présentant le plus petit diamètre extérieur, et relié à la partie d'articulation extérieure (1) et
- **en ce que** l'adaptateur (16) est enfin soudé avec la partie d'articulation intérieure (6) intégrale dans la zone de l'embout de soudage (15).

5. Procédé conformément à la revendication n°4,
**caractérisé**
**en ce que** la partie d'articulation intérieure (6) intégrale est trempée superficiellement.

6. Procédé conformément à la revendication n°4 ou n°5,
**caractérisé**
**en ce que** l'adaptateur (16) est soudé avec le joint homocinétique préfabriqué seulement après sa liaison avec une pièce de raccordement.
